# EUROPEAN PATENT APPLICATION

(11) **EP 2 591 708 A1**
(43) Date of publication of application: **15.05.2013**
(21) Application number: 11397531.2
(22) Date of filing: 08.11.2011
(51) Int. Cl.: A47J 43/28, A47G 21/04

(54) **Scoop used in cooking and/or portioning food**

(71) Applicant: Magisso OY, 00100 Helsinki (FI)
(72) Inventor: Sirén, Juhani, 00100 Helsinki (FI)
(74) Representative: LEITZINGER OY

(57) **Abstract**

The invention relates to a scoop (1) used in cooking and/or portioning food, comprising a plate-like, elongated handle (10) and a plate-like scoop blade (20) as its extension. The handle (10) is provided with at least one weakening line (11) in the longitudinal direction of the handle (10), which allows the handle (10) to be bent into a chute by pressing the handle (10). The scoop blade (20) is provided with two or more weakening lines (21, 22) which join the longitudinal weakening line (11) or weakening lines of the handle (10) in such a way that the scoop blade (20) is bent into a chute, cup, spoon or dish forced by the bending of the handle (10) into a chute.

## Description

The present invention relates to a scoop used in cooking and/or portioning food, comprising a plate-like, elongated handle and a plate-like scoop blade as its extension.

Previously are known scoops of this type which have traditionally been made of wood. They are typically utensils intended for cooking taking place by a stove and/or an oven, comprising a handle, a shaft usually as an extension of the handle or in conjunction with it and a scoop part (scoop blade) as an extension of the shaft (or handle). Nowadays, also heat-resistant plastics such as polyamide, are used as material instead of wood. They are suitable for use, for example, with so-called Teflon pans or the like and are also dishwasher-safe.

These types of scoops are mainly intended for use in connection with preparing food. Therefore, removing and portioning all foods from the cooking dishes (for example, meat and pan juice from a frying pan or pasta/rice from a saucepan) is difficult with this type of a scoop. There are various utensils known as such for removing prepared food from a dish intended for cooking. These include, for example, a ladle, a pasta server and a spoon. Therefore, various utensils are often required for cooking and serving/portioning prepared food.

The aim of the present invention is to provide a utensil used in cooking, by means of which the handling of food after preparation can also easily be carried out, thus facilitating and speeding up especially handling following cooking, such as portioning.

To achieve the above aim, the present invention is characterised in that the handle is provided with at least one weakening line in longitudinal direction of the handle, which allows the handle to be bent into a chute by pressing the handle, and that the scoop blade is provided with two or more weakening lines, which join the longitudinal weakening line or weakening lines of the handle in such a way that the scoop blade is bent into a chute, cup, spoon or dish forced by the bending of the handle into a chute.

With this is achieved the aim of the invention, where in a single cooking utensil is combined the food preparation function and the food handling function following cooking, so that both functions can easily be carried out with the same utensil. The use of several utensils is thus avoided.

Preferred embodiments of the invention are disclosed in the dependent claims.

The invention is described in greater detail in the following, with reference to the accompanying drawings, in which:
- Figure 1: shows a top view of a scoop according to a preferred embodiment of the invention when straight,
- Figure 2: shows a side view of the scoop shown in Figure 1,
- Figure 3: shows a top view of the scoop of Figures 1 and 2 when bent,
- Figure 4: shows the scoop of Figure 3 from the side,

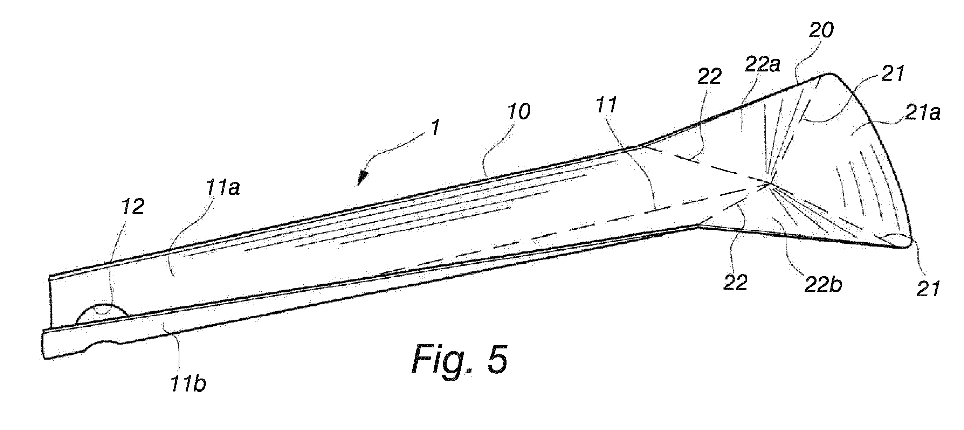

- Figure 5: shows an axonometric view of a scoop bent according to Figures 3 and 4,
- Figure 6: shows a top view of a second preferred embodiment of the scoop according to the invention when straight, and
- Figure 7: shows a top view of a third preferred embodiment of the scoop according to the invention.

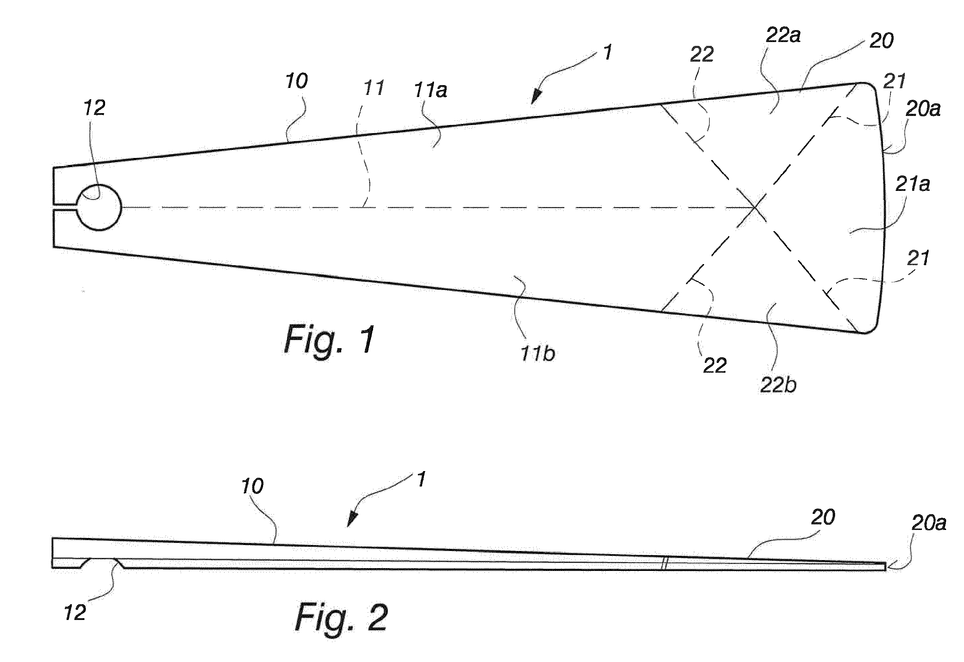

Figures 1 and 2 thus show a scoop according to the invention, which is marked with reference numeral 1. Here, the scoop 1 is made of a plate-like element, the material of which is preferably plastic, such as polyamide. The basic parts of the scoop 1 include a handle, marked with reference numeral 10, and a plate-like scoop blade provided as its extension, marked with reference numeral 20. In this case, the handle 10 is the narrow first end of the scoop 1, which widens as a sector towards the scoop blade 20.

Furthermore, the scoop blade 20 is the second end, widening as a sector as a direct extension of the handle 10, which ends in the longitudinal direction of the scoop preferably in a curved or essentially straight edge 20a. The scoop according to Figures 1 and 2 can be used, for example, as an ordinary spatula.

The handle 10 of the scoop 1 according to Figures 1 and 2 is provided with a single weakening line, marked with reference numeral 11, in the longitudinal direction of the handle 10. This weakening line 11 continues over a distance into the scoop blade 20 area, preferably to the centre of the scoop blade 20, where it joins at least four crossing weakening lines 21 and 22 in the scoop blade 20 area.

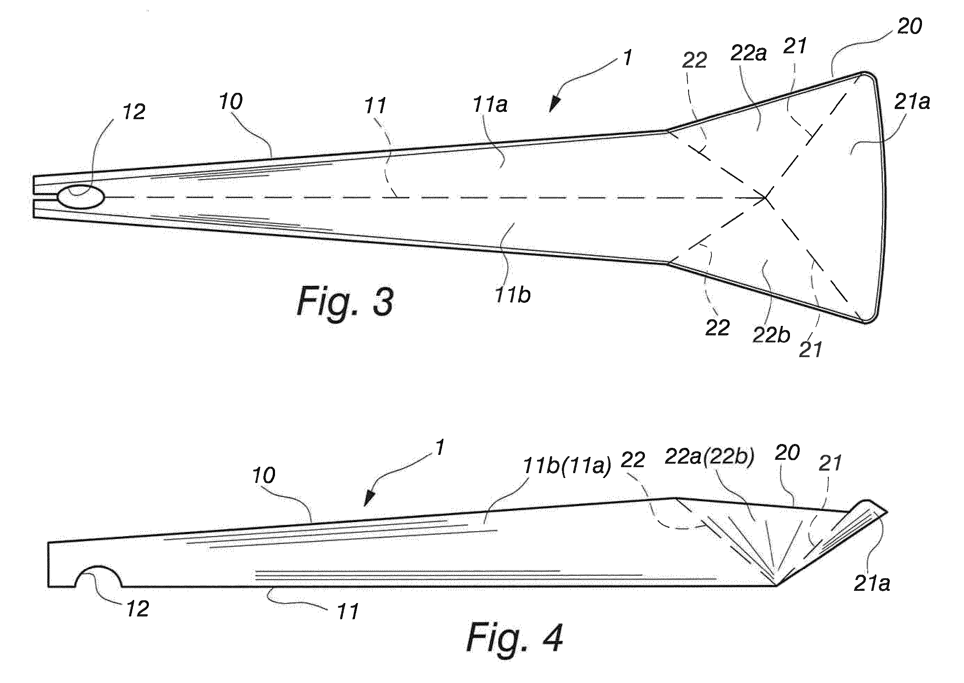

The handle 10 is thus divided into two opposite bending parts 11a and 11b which can be turned towards one another with respect to the hinge axle determined by the weakening line 11, as shown in Figures 3 and 4. The handle 10 thus becomes chute-like. At the same time, the scoop blade 20 bends into a cup or dish as shown in Figures 3 and 4, forced by the bending of the handle 10 into a chute and allowed by the crossing weakening lines 21 and 22 provided in the scoop blade. It is noted that in the scoop blade 20 are thus formed three planar bending segments 21a and 22a and 22b of the scoop blade 20, which bend with respect to one another, thus forming the above-mentioned cup or dish. This embodiment is particularly advantageous for moving and portioning liquid foods (broths, sauces, etc.) directly from the dish intended for cooking.

The above-mentioned weakening lines 11 in the handle and the weakening lines 21 and 22 in the scoop blade are preferably thinnings in the plate material. The thinnings are preferably made on the bottom side of the scoop 1, whereby they form elongated weakening grooves. These weakening grooves thus act as membrane hinges through which the different parts 11a, 11b, 21a, 22a and 22b of the scoop 1 move and allow the scoop 1 to bend into the position shown in Figures 3 and 4. The advantage of this embodiment is that the entire scoop can be made of a single piece without structural seams.

Instead of a weakening groove, the weakening lines can be made of elements differing structurally from the plate material (not shown). They may be elements of elastic, heat-resistant material, which are fixed between the different parts of the scoop 1 and act as membrane hinges. This type of an element may correspond in material thickness to the material thickness of the plate material of the scoop 1, in which case no grooves are formed on the surface of the scoop. Furthermore, the material may be of a somewhat elastic substance, in which case the scoop bent in accordance with Figures 3 and 4 will return by spring action to the straightened position shown in Figures 1 and 2.

The first end of the scoop 1 is provided with a hole 12 or other means by which the scoop can be placed to hang for storage, for example, on a storage hook mounted on the wall.

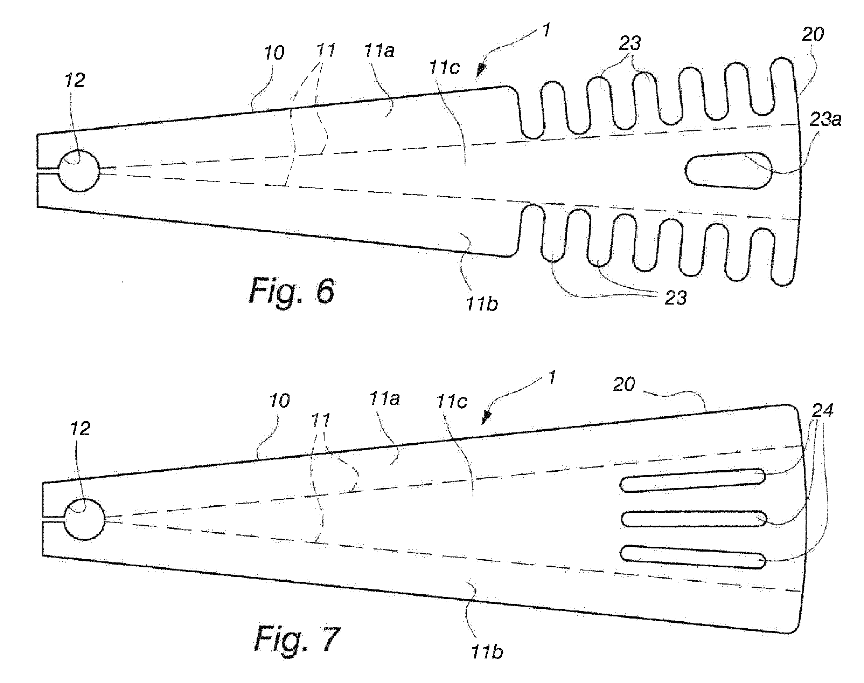

Figure 6 shows a second preferred embodiment of the invention. In it, the handle 10 comprises two weakening lines 11 which distance from one another as a sector towards the scoop blade 20, extending across the scoop blade 20. These two weakening lines 11 thus divide the scoop 1 into the two bending parts 11a and 11b and in addition to a centre part 11c between them. The scoop blade will then also bend into a chute like the handle 10. The parts of the scoop blade 20 extending from the bending parts 11a and 11b are formed into successive fork-like projections 23 or teeth. The projections 23 preferably extend transversely to the longitudinal direction of the adjacent weakening lines 11. In addition to functioning as a mixer and a scoop during the preparation of pasta (for example, spaghetti) or noodles, when bent in accordance with the invention, the scoop 1 according to this embodiment also functions as a server for removing them from the boiling water or for portioning them. Excess liquid (boiling water) can be drained through a hole 23a made in the centre part 11c. The hole 23a is preferably made in the scoop blade 20 area.

Figure 7 further shows a third preferred embodiment of the invention. Also in this case, the handle 10 comprises two weakening lines 11 which distance from one another as a sector towards the scoop blade 20, extending across the scoop blade 20. These two weakening lines 11 thus divide the scoop 1 into two bending parts 11a and 11b and in addition into a centre part 11c between them. The scoop blade 20 will then also bend into a chute. In this embodiment, in the centre part 11c of the scoop, within the scoop blade area 20, is made a plurality of openings 24, which are in this case elongated and made directly in the centre part 11c. The openings may also be of a different shape, for example, round or square, and their number may be optional. The openings 24 may also be arranged so densely that they form a meshy perforated surface in the scoop blade 20 area. The scoop 1 shown in Figure 7 is also suitable as a server, especially for rice and other processed foods of structurally similar size, such as couscous grains. The size of the holes 24 is selected in such a way that processed foods of the size of rice and couscous grains will not fall from the bent scoop 1, but excess boiling water will drain off through them. Furthermore, the bending parts 11a and 11b bent in accordance with Figures 3 and 4 prevent the processed food from falling off the edges, which facilitates and speeds up the portioning of such processed foods.

The present invention is not limited to the embodiments disclosed, but may be applied in many ways within the scope of protection of the appended claims.

## Claims

1. A scoop (1) used in cooking and/or portioning food, comprising a plate-like, elongated handle (10) and a plate-like scoop blade (20) as its extension, **characterised in that** the handle (10) is provided with at least one weakening line (11) in the longitudinal direction of the handle (10), which allows the handle (10) to be bent into a chute by pressing the handle (10), and that the scoop blade (20) is provided with two or more weakening lines (21, 22) which join the longitudinal weakening line (11) or weakening lines of the handle (10) in such a way that the scoop blade (20) is bent into a chute, cup, spoon or dish forced by the bending of the handle (10) into a chute.

2. A scoop (1) as claimed in claim 1, **characterised in that** the two weakening lines (11) in the handle (10), which distance from one another towards the scoop blade (20), extend across the scoop blade (20).

3. A scoop (1) as claimed in claim 1, **characterised in that** one weakening line (11) of the handle (10) continues to the centre of the scoop blade (20) where it joins at least four crossing weakening lines (21, 22), which are in the scoop blade (20) area.

4. A scoop (1) as claimed in any of the claims 1 to 3, **characterised in that** the handle (10) and the scoop blade (20) are of the same plate material.

5. A scoop (1) as claimed in any of the claims 1 to 4, **characterised in that** the weakening lines (11, 21, 22) are thinnings of the plate material which function as membrane hinges.

6. A scoop (1) as claimed in any of the claims 1 to 4, **characterised in that** the weakening lines (11, 21, 22) are elements of elastic material which function as membrane hinges.
